Europäisches Patentamt

European Patent Office

Office européen des brevets

(11) Veröffentlichungsnummer: **0 219 023 B1**

# (12) EUROPÄISCHE PATENTSCHRIFT

(45) Veröffentlichungstag der Patentschrift: **01.04.92**

(21) Anmeldenummer: **86113785.9**

(22) Anmeldetag: **04.10.86**

(51) Int. Cl.⁵: **G01N 19/00**, B60T 8/00

(54) **Bremsdruckregelsystem.**

(30) Priorität: **08.10.85 DE 3535843**

(43) Veröffentlichungstag der Anmeldung:
**22.04.87 Patentblatt 87/17**

(45) Bekanntmachung des Hinweises auf die
Patenterteilung:
**01.04.92 Patentblatt 92/14**

(84) Benannte Vertragsstaaten:
**AT DE FR GB IT SE**

(56) Entgegenhaltungen:
**EP-A- 0 152 602**
**GB-A- 2 061 435**
**GB-A- 2 078 322**
**US-A- 4 094 555**

(73) Patentinhaber: **ROBERT BOSCH GMBH**
**Postfach 30 02 20**
**W-7000 Stuttgart 30(DE)**

(72) Erfinder: **Cao, Chi-Thuan**
**Tubizerstrasse 35**
**W-7015 Korntal 1(DE)**
Erfinder: **Janetzke, Helmut**
**Liegnitzerstrasse 4**
**W-7141 Schwieberdingen(DE)**
Erfinder: **Schulz, Alfred**
**Leinfelderweg 7**
**W-7141 Oberriexingen(DE)**
Erfinder: **Michi, Harald**
**Weinbergstrasse 6**
**W-7531 Ölbronn-Dürn 1(DE)**

(74) Vertreter: **Kammer, Arno, Dipl.-Ing.**
**ROBERT BOSCH GmbH Zentralstelle Patente**
**2 Postfach 30 02 20**
**W-7000 Stuttgart 30(DE)**

**Beschreibung**

Die fortlaufende Kenntnis z.B. des sich häufig laufend ändernden Kraftschlußbeiwerts zwischen Fahrzeugrad und Straße z.B. eines Straßenfahrzeugs erleichtert die Auslegung eines Bremsdruckregelsystems bzw. eines Antiblockierreglers sehr. In der Vergangenheit haben Antiblockierregler meist mit Radverzögerungs-, Radbeschleunigungs- und/oder Radschlupfsignalen gearbeitet, wobei die zur Bestimmung der Radschlupfsignale notwendige Fahrzeuggeschwindigkeit aus Radgeschwindigkeitssignalen abgeleitet wird. Da diese Ableitung nur eine Annäherung darstellt, kann die Regelung des Bremsdrucks nicht optimal sein.

Aus der EP-A1-0152602 ist ein Verfahren zur Ermittlung eines optimalen Bremsschlupfwerts bekannt, bei dem der Bremsschlupf künstlich variiert wird und dabei in zeitlichen Abständen (K, K + 1 ...) die Meßwertkombinationen Radgeschwindigkeit und Fahrzeuggeschwindigkeit für verschiedene Schlupfwerte bestimmt werden.

Diese Meßwertkombinationen werden in eine vorgegebene Funktion, die auch den ermittelten Bremsdruck und die Aufstandskraft als zu bestimmende Größen enthält, eingesetzt und damit werden die unbekannten Koeffizienten der augenblicklich gültigen $\mu$-Schlupfkurve ermittelt. Hieraus ergibt sich dann der optimale Schlupfwert.

Aus der GB-A 2 061 435 ist ein Verfahren bekannt, bei dem aus der Radbeschleunigung oder -verzögerung, der Radlast und dem Bremsmoment der Kraftschlußbeiwert ermittelt und zur Bremsdruckregelung herangezogen wird.

Der Erfindung liegt die Aufgabe zugrunde, eine Methode anzugeben, bei der mit Hilfe von gut meßbaren Größen der Kraftschlußbeiwert $\mu$ und/oder andere wichtige physikalische Größen ermittelt werden können, mit Hilfe derer eine Bremsdruckregelung ermöglicht wird, sodaß es zu keinem Blockieren kommt bzw. auf ein Blockieren optimal reagiert werden kann.

Diese Aufgabe wird durch die im Anspruch 1 angegebenen Merkmale gelöst. Aus dem erhaltenen Kraftschlußbeiwert $\mu$ läßt sich bei einer Ausführungsform (Anspruch 2) in einfacher Weise die Fahrzeuggeschwindigkeit ermitteln. (Anspruch 3) und auch die Größe K$\mu$ (Anspruch 4), die die Steigung der $\mu$-Schlupfkurve beim gerade ermittelten $\mu$-Wert angibt.

Mit Hilfe des ermittelten $\mu$-Wertes ist eine direkte Steuerung des Bremsdrucks in Abhängigkeit vom $\mu$-Wert denkbar (Anspruch 8), wodurch ein Blockieren verhindert werden kann. Die exakte Kenntnis der Fahrzeuggeschwindigkeit verbessert die Wirkung eines Schlupfreglers oder den Schlupfreglerteil eines Antiblockierreglers (Anspruch 9) und die Kenntnis der Größe K$\mu$ erlaubt es, den Bremsdruck und damit den Radschlupf so zu regeln, daß immer bei einem optimalen Arbeitspunkt der $\mu$-Schlupfkurve gearbeitet wird (Anspruch 10). Dieser liegt bekanntlich in der Nähe des Maximums der $\mu$-Schlupfkurve und links davon. Man wird deshalb einen kleinen positiven Vergleichswert für K$\mu$ vorgeben. Schließlich bietet die erfindungsgemäße Methode noch die Möglichkeit den Reibwert $\rho_B$ der Paarung Bremsbelag und Bremsscheibe zu berechnen (Anspruch 5).

Ein wesentlicher Vorteil der erfindungsgemäßen Lösung ist, daß zur Bestimmung von $\mu$ und der weiteren Größen die Größen $P_B$ und $V_R$ gemäß dem heutigen Stand der Technik leicht und exakt bemessen werden können.

Man wird, da die verschiedenen Räder eines Fahrzeugs einen unterschiedlichen Kraftschlußbeiwert $\mu$ aufweisen können, das $\mu$ an verschiedenen Rädern ermitteln und entweder getrennt zur Steuerung des Drucks am zugehörigen Rad (über $\mu$ direkt, oder über K$\mu$) benutzen oder die $\mu$-Werte mitteln, wobei man bei den angetriebenen Rädern wegen der Kopplung über das Differential einen Korrekturfaktor -$\gamma$ anbringen muß (Anspruch 6 bzw 7).

In der folgenden Ableitung und in den in den Ansprüchen angegebenen Zusammenhängen werden die Größen für die Radgeschwindigkeit, die Fahrzeuggeschwindigkeit und den Bremsdruck primär als unnormierte Größen angegeben. Sie können jedoch auch normiert sein und werden in der Beschreibung auch alternativ so angegeben.

Ein wesentlicher Punkt, beim Ausführungsbeispiel gemäß Anspruch 2, bestand darin, daß ein linearer Zusammenhang zwischen $\mu$ und dem Schlupf s eingeführt wurde.

Dieser lautet:

EP 0 219 023 B1

$$\mu = K\mu \cdot s + h\mu \tag{1}$$

wobei $K\mu = K_{\mu(so)} = \dfrac{d\mu}{dt} \Big|_{s=so}$ und

$$h\mu = h\mu(so) = \mu_o - s_o \frac{d\mu}{dt} \Big|_{s=so}$$

und $s_o$ und $\mu_o$ Betriebspunkte der $\mu$-Schlupfkurve sind. Durch Umformung erhält man

$$\mu = \overset{\star}{K_2} (V_F - V_R) + h\mu \tag{2}$$

mit $\overset{\star}{K_2} = \dfrac{K_\mu}{V_F}$

Für die mormierten Größen lauten die Ausdrücke

$$\mu = K_2 (V_{FN} - V_{RN}) + h\mu \tag{2a}$$

mit $K_2 = \dfrac{K_\mu}{V_{FN}}$

wobei $V_{FN}$ und $V_{RN}$ über $V_o$ normierte Größen sind. In Gleichung (2) bzw. (2a) sind sämtliche Nichtlinearitäten zu Lasten der Parameterveränderlichen $K_2^*$ bzw. $K_2$ und $h\mu$ beseitigt.

Setzt man die Gleichung (2) bzw. (2a) in die Gleichung (3) für das Kräfte-und Momentengleichgewicht

$$\overset{\star}{T_R} \cdot \overset{\bullet}{V_R} = \mu - \overset{\star}{K_B} \cdot P_B \qquad \text{bzw.} \qquad T_R \cdot \overset{\bullet}{V_{RN}} = \mu - K_B \cdot P_{BN} \tag{3}$$

mit $\overset{\star}{T_R} = \dfrac{\theta_R}{G_F \, r_R{}^2}$ und $T_R = \dfrac{\theta_R \cdot V_o}{G_F \, r_R{}^2}$

$$\overset{\star}{K_B} = \rho_B \cdot \frac{r_B}{r_R} \cdot \frac{A_B}{G_F} \qquad\qquad K_B = \rho_B \frac{r_B}{r_R} \cdot \frac{A_B P_o}{G_F}$$

welche Werte in kurzzeitiger Betrachtung als Konstante anzusehen sind (sh. die Symbolerläuterung auf S. 10), ein, so erhält man:

3

$$\overset{*}{T}_{ERS} \cdot \overset{\bullet}{V}_R + V_R = -\overset{*}{V}_{ERS} \cdot P_B + z^* \tag{4}$$

bzw. $\quad T_{ERS} \cdot \overset{\bullet}{V}_{RN} + V_{RN} = -V_{ERS} \cdot P_{BN} + z$

mit $\quad \overset{*}{T}_{ERS} = \dfrac{T_R^*}{K_2^*} \quad$ bzw. $T_{ERS} = \dfrac{T_R}{K_2}$

$$\overset{*}{V}_{ERS} = \dfrac{K_B^*}{K_2^*} \quad \text{bzw. } V_{ERS} = \dfrac{K_B}{K_2}$$

$$z^* = V_F + \dfrac{h\mu}{K_2^*} \quad \text{bzw.} \quad z = V_{FN} + \dfrac{h\mu}{K_2} \quad .$$

(4) ist eine lineare Differentialgleichung 1. Ordnung. Da diese im Rechner verarbeitet werden soll, wird eine äquivalente Differenzengleichung aufgestellt (5).

$V_{R(K+1)} = P_2^* \bullet V_{R(K)} - p_1^* P_{B(K)} + c_1^*$ bzw.
$V_{RN(K+1)} = p_2 \bullet V_{RN(K)} - p_1 P_{BN(K)} + c_1 \tag{5}$

Hierin bedeuten K und K + 1 aufeinanderfolgende Abtastzeitpunkte des Rechners im Abstand $T_A$, wobei für die Parameter $p_1^*$, $p_2^*$ und $c_1^*$ bzw. $p_1$, $p_2$ und $c_1$ folgende Beziehungen gelten

$$p_2^* = \exp. \left(- \dfrac{T_A}{T_{ERS}^*}\right) \quad \text{bzw.} \quad p_2 = \exp. \left(- \dfrac{T_A}{T_{ERS}}\right)$$

bzw.

$$p_2^* = 1 - \dfrac{T_A}{T_{ERS}^*} \quad \text{bzw.} \quad p_2 = 1 - \dfrac{T_A}{T_{ERS}} \quad \text{bei } \dfrac{T_A}{T_{ERS}^*} \ll 1 \quad \text{bzw.} \dfrac{T_A}{T_{ERS}} \ll 1$$

$$\tag{6}$$

$$p_1^* = \overset{*}{V}_{ERS} (1-p_2^*) \quad \text{bzw.} \quad p_1 = V_{ERS} (1-p_2)$$

$$c_1^* = z^* (1-p_2^*) \quad \text{bzw.} \quad c_1 = z (1-p_2)$$

Unter Verwendung bekannter Identifikationsalgorithmen wie z.B. Least-Squares mit variablem Forgetting-Faktor lassen sich die Parameter $(p_1^*, p_2^*, c_1^*)$ bzw. $(p_1, p_2, c_1)$ aus den gemessenen Größen $P_{B(K)}$ und

$V_{R(K)}$ bzw. $P_{BN(K)}$ und $V_{RN(K)}$ zum Zeitpunkt K abschätzen. Die ^-Bezeichnung kennzeichnet den entsprechenden Schätzwert zu einem bestimmten Zeitpunkt. Wenn die Werte $\hat{p}_1$, $\hat{p}_2$ und $\hat{c}_1$ bzw. $\hat{p}_1{}^*$, $\hat{p}_2{}^*$ und $\hat{c}_1{}^*$ durch Abschätzung vorliegen, kann durch die durch Umformung von (2) erhaltene Beziehung

$$\mu = k_2{}^* \left(\frac{\hat{c}_1{}^*}{1-\hat{p}_2{}^*} - V_R\right) \quad \text{bzw.} \quad \mu = K_2 \left(\frac{\hat{c}_1}{1-\hat{p}_2} - V_{RN}\right) \tag{7}$$

$\mu$ berechnet werden, wobei für $K_2{}^*$ bzw. $K_2$

$$K_2{}^* = \frac{T_R{}^*}{T_A} (1-\hat{p}_2{}^*) \quad \text{bzw.} \quad K_2 = \frac{T_R}{T_A} \cdot (1-\hat{p}_2) \text{ einzusetzen ist, wenn}$$

$$(1-\hat{p}_2{}^*) \quad \text{bzw.} \quad (1-\hat{p}_2) \ll 1 \text{ ist und sonst}$$

$$K_2{}^* = \frac{T_R{}^*}{T_A} (-\ln\hat{p}_2{}^*) \quad \text{bzw.} \quad K_2 = \frac{T_R}{T_A} \cdot (-\ln\hat{p}_2) \text{ einzusetzen ist.}$$

Die Größen $V_F$ bzw. $V_{FN}$ und $k\mu$ lassen sich aus dem $\mu$ ableiten; die Reibspannung $\rho_B$ erhält man unter Verwendung von $\hat{p}_1{}^*$ bzw. $\hat{p}_1$.

Anhand der Ausführungsbeispiele der Zeichnung soll ein Ausführungsbeispiel der Erfindung näher erläutert werden.

Es zeigen:

Fig. 1  ein Ausführungsbeispiel einer Schaltung zur Ermittlung von $\mu$, $K\mu$, $V_{FN}$ und $\rho_B$ unter Verwendung normierter Größen.

Fig. 2a-2c  Anwendungen der ermittelten Werte zur Bremsdruckregelung.

Fig. 3 und 4  Möglichkeiten zur genaueren Ermittlung des Kraftschlußbeiwertes $\mu$ und der davon abhängigen Größen.

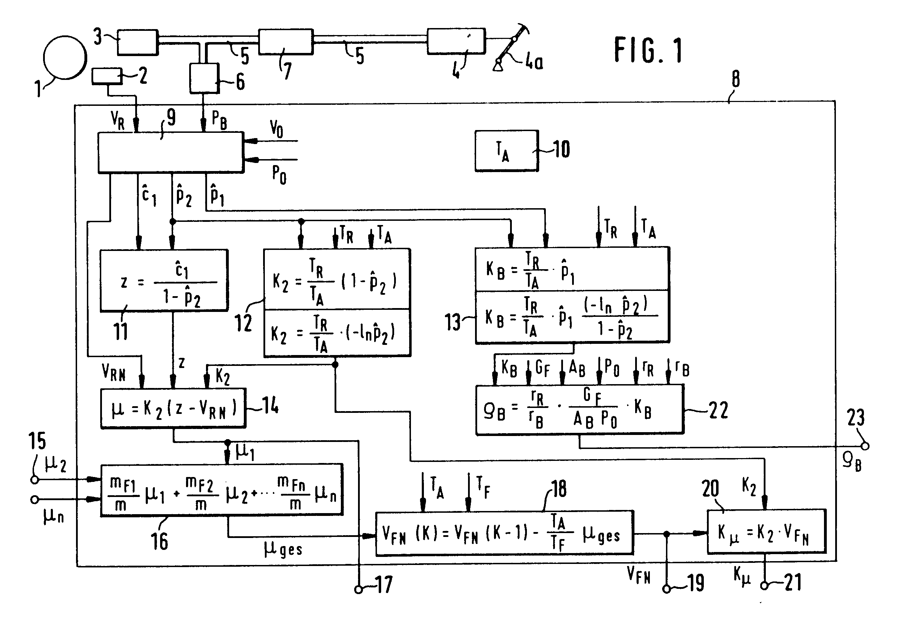

In Fig. 1 ist mit 1 ein Rad bezeichnet, das einen Radgeschwindigkeitssensor 2 und eine Bremse 3 aufweist. Die Bremse 3 wird z.B. von einem Hauptbremszylinder 4 über eine Bremsleitung 5 mittels eines Pedals 4a betätigt. An die Bremsleitung 5 ist ein Bremsdruckgeber 6 angeschaltet; außerdem ist in die Bremsdruckleitung eine Bremsdrucksteuereinrichtung 7 z.B. ein 3/3 Magnetventil eingeschaltet, das für den Bremsmedium in der Grundstellung durchlässig ist.

Die von dem Sensor 2 und dem Druckgeber 6 ermittelten Werte $V_R$ und $P_B$ werden einer Schaltungsanordnung 8 und dort speziell einem Schaltungsteil 9 zugeführt, dem außerdem noch die für eine Normierung der Größen $V_R$ und $P_B$ notwendigen, konstanten Werte $V_o$ und $P_o$ zugeführt werden. Das Schaltungsteil 9 bildet die normierten Größen $V_{RN}$ und $P_{BN}$, schätzt gemäß der Differenzengleichung (5) unter Anwendung bekannter Identifikationsalgorithmen gesteuert von einem Taktgeber 10 (Taktabstand $T_A$), der auch die Schritte der anderen Schaltungsteile steuert, die Parameter $\hat{p}_2$, $\hat{p}_1$ und $\hat{c}_1$ zu den einzelnen Taktzeitpunkten ab, und gibt sie an weitere Schaltungsteile 11, 12 und 13 ab.

Im Schaltungsblock 11 wird die Zwischengröße $z = \hat{c}_1/(1-\hat{p}_2)$ gebildet; im Schaltungsblock 12 wird der Ausdruck $K_2$, der je nachdem, ob $(1-\hat{p}_2) \ll 1$ oder nicht, $K_2$ zu $K_2 = (T_R/T_A) \cdot (1-\hat{p}_2)$ bzw. zu $K_2 = (T_R/T_A) \cdot (-\ln\hat{p}_2)$ berechnet, und der gültige Wert ausgegeben. Zu dieser Berechnung ist es notwendig, daß die Konstanten $T_R$ und $T_A$ ($T_A$ und $T_R$ sind konstante Rechengrößen) eingegeben worden.

In einem weiteren Block 14, dem die Größe $V_{RN}$ aus dem Block 9, die Zwischengröße $z$ aus Block 11 und die gültige Größe $K_2$ aus Block 12 zugeführt werden, wird gemäß der Beziehung

$$\mu = K_2 (z-V_{RN})$$

$\mu$ ermittelt. Diese Größe liegt an Klemme 17 an. In einem Schaltungsblock 18 wird aus der im vorhergehenden Takt (z.B. (k-1)) ermittelten Fahrzeuggeschwindigkeit $V_{FN}(k-1)$ und dem zugeführten $\mu$, sowie den Konstanten $T_A$ und $T_F$ = Vo/g (g = Erdbeschleunigung) die augenblickliche Fahrzeuggeschwindigkeit $V_{FN(k)}$ ermittelt, die an Klemme 19 anliegt. Je nach Anforderung an die Qualität dieser Größe gegenüber der echten Fahrzeuggeschwindigkeit muß man die Eingangsgröße $\mu_{ges}$ in Block 16 berechnen. Beschränkt man sich auf ein Rad und setzt die gleichmäßige Verteilung des Fahrzeuggewichts auf alle Räder voraus, so kommt das $\mu_1$ dieses Rades als $\mu_{ges}$ am Eingang des Schaltungsblocks 18 zum Tragen. Bei einer verbesserten Bestimmung der Fahrzeuggeschwindigkeit muß die Verteilung des Fahrzeuggewichts auf die einzelnen Räder bekannt sein. Es ergibt sich folgendes $\mu_{ges}$ für den Eingang von Block 18:

$$\mu_{ges} = (\frac{mF_1}{m}\mu_1 + \frac{mF_2}{m}\mu_2 + \dots + \frac{mF_n}{m}\mu_n) \qquad (8)$$

wobei m = $m_{F1}$ + $m_{F2}$ + ... + $m_{Fn}$ ist.

(n ... Anzahl der Räder)

Dann muß in Block 16 die rechte Seite der Gleichung 8 realisiert werden.

Aus der ermittelten Fahrzeuggeschwindigkeit $V_{FN}$ erhält man am Ausgang 21 eines weiteren Schaltungsblocks 20 durch Multiplikation mit dem gültigen $K_2$ aus Block 12 die Größe K$\mu$, die die Steigung der $\mu$-Schlupfkurve beim augenblicklichen $\mu$ angibt.

Schließlich wird in einem Block 13 aus $\hat{p}_1$ und $\hat{p}_2$ und den Konstanten $T_R$ und $T_A$ die Größe $K_B$, die je nachdem, ob $(1-\hat{p}_2) \ll 1$ ist oder nicht, zu

$$K_B = \frac{T_R}{T_A} \cdot \hat{p}_1$$

bzw.

$$K_B = \frac{T_R}{T_A} \cdot \hat{p}_1 \frac{(-\ln\hat{p}_2)}{1-\hat{p}_2}$$

gebildet. Durch Berücksichtigung einer Reihe von Konstanten ermittelt ein Block 22 hieraus den Reibwert $\rho_B$ der Reibpaarung Bremsbelag und Bremsscheibe; der ermittelte Wert für $\rho_B$ liegt an Klemme 23 an.

Die so ermittelten Werte für $\mu$, $V_{FN}$ und K$\mu$ kann man in verschiedener Weise zur Bremsdruckregelung heranziehen. Gemäß Fig. 2a, in der ein Ausschnitt des Bremssystems der Fig. 1 gezeigt ist, nämlich das 3/3-Ventil 7, die Bremse 3, der Sensor 2 und der Druckgeber 6, wird das Fahrzeuggeschwindigkeitssignal $V_{FN}$ der Klemme 19 einer Auswerteschaltung 25 zugeführt, der außerdem noch das Radgeschwindigkeitssignal $V_R$ des Sensors 2 und die Konstante $V_o$ zugeführt wird. Mit Hilfe von $V_o$ wird dort die Fahrzeuggeschwindigkeit $V_F$ und daraus eine Referenzgeschwindigkeit $V_{Ref}$ gebildet, die in bekannter Weise zusammen mit $V_R$ zur Schlupfregelung dient, wobei z.B. bei Erreichen eines bestimmten Radschlupfs eine Druckabsenkung mittels des 3/3 Magnetventils 7 erfolgt.

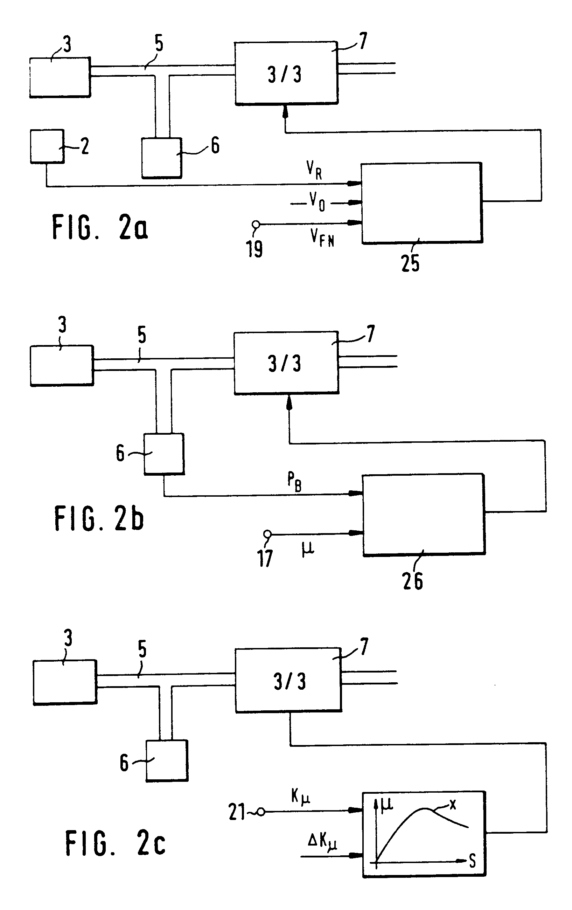

Fig. 2b, die wieder die Teile 3 und 5 bis 7 der Fig. 1 zeigt, soll der Bremsdruck nach Maßgabe des ermittelten $\mu$ (Klemme 17) geregelt werden, d.h. ein dem ermittelten $\mu$ entsprechender Bremsdruck an der Bremse 3 eingesteuert werden. Dies geschieht durch Ansteuern des Magnetventils 7 durch eine Auswerteschaltung 26, wobei die Druckvariation durch Vergleich der Signale des Druckgebers 6 und des $\mu$-Signals (von Klemme 17) erfolgt.

Schließlich zeigt Fig. 2c einen Teil eines Reglers, der die Größe K$\mu$ von Klemme 21 verwertet und den Bremsdruck so steuert, daß der Arbeitspunkt X nahe beim Maximum aber etwas links davon liegt. Die Ablage vom Maximum (wo K$\mu$ = 0 ist) wird hier durch einen kleinen positiven Steigungswert + $\Delta$K$\mu$ vorgegeben.

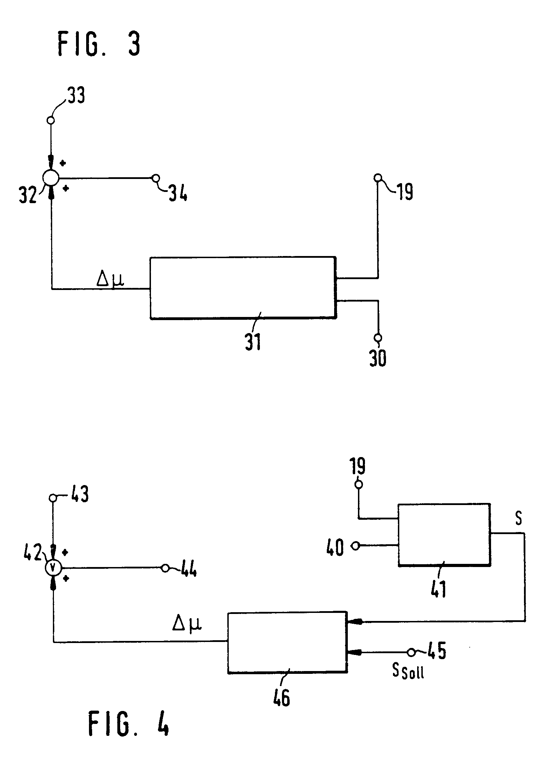

Fig. 3 ist als Ergänzung der Fig. 1 für den Fall anzusehen, daß zusätzlich die Fahrzeuggeschwindigkeit gemessen wird. In diesem Fall kann man die errechnete Fahrzeuggeschwindigkeit $V_{F(K)}$ an Klemme 19 mit der an einer Klemme 30 zugeführten gemessenen Fahrzeuggeschwindigkeit $V_F$ in einem Korrekturregler 31 vergleichen und in Abhängigkeit von diesem Vergleich eine Korrekturgröße $\Delta\mu$ erzeugen, mit der das am Ausgang des Blocks 14 vorhandene und an einer Klemme 33 zugeführte ermittelte $\mu_1$ in einem Addierer 42 zu $\mu_{1Korr}$ (an Klemme 34) korrigiert wird. Dieses korrigierte $\mu_{1Korr}$ wird dann dem Block 16 der Fig. 1 zugeführt und ist genauer als der ermittelte Wert $\mu$.

Eine weitere Möglichkeit der Verbesserung von $\mu$ ist gemäß Fig. 4 dann möglich, wenn man aus der errechneten Fahrzeuggeschwindigkeit $V_{F(K)}$ an einer Klemme 19 und der an einer Klemme 40 zugeführten Radgeschwindigkeit $V_R$ in einem Block 41 den Schlupf S bildet und diesen in einem Korrekturregler 46 mit einem vorgegebenen Sollschlupf $S_{Soll}$, der auch von Parametern abhängig sein kann, vergleicht und daraus einen Korrekturwert $\Delta\mu$ ermittelt, mit dem in einem Addierer 42 der an einer Klemme 43 (entsprechen 33) zugeführte Wert $\mu_1$ zu $\mu_{1Korr}$ korrigiert und an Klemme 44 (entspr. 34) abgegeben wird.

Dieses korrigierte $\mu_{1Korr}$ wird dann dem Block 16 der Fig. 1 zugeführt. Auf diese Weise erhält man einen genaueren Wert von $\mu$ und damit eine genauere Fahrzeuggeschwindigkeit $V_F$.

## Bezeichnungen

$V_F$ : Fahrzeuggeschwindigkeit

$V_R$ : Radgeschwindigkeit }

$\omega_R$ : Winkelgeschwindigkeit } $\omega_R \cdot r_R = V_R$

$r_R$ : mittlerer Halbmesser des Rades }

$\theta_R$ : Trägheitsmoment

$\mu$ : Kraftschlußbeiwert }

$F_R$ : Reibungskraft } $F_R = \mu G_F$

$G_F$ : anteilmäßiges Fahrzeuggewicht }

$m$ : Fahrzeugmasse

$m_F$ : anteilmäßige Fahrzeugmasse }

$g$ : Fallbeschleunigung } $G_F = m_F \cdot g$

$\rho_B$ : Reibwert der Paarung Bremsbelag-Bremsscheibe

$A_B$ : Fläche des Bremsbelages

$P_B$ : Druck im Radbremszylinder

$F_B$ : Bremskraft     $F_B = \rho_B \cdot A_B \cdot P_B$

$r_B$ : mittlerer Angriffsradius der Bremskraft

## Patentansprüche

1. Verfahren zur Regelung des Bremsdrucks von Fahrzeugen unter Verwendung der Meßgröße Radgeschwindigkeit $V_R$, dadurch gekennzeichnet, daß fortlaufend das Meßwertepaar augenblicklicher Bremsdruck $P_B$ und augenblickliche Radgeschwindigkeit $V_R$ gemessen wird, und daß hieraus der augenblickliche Wert wenigstens einer der physikalischen Größen $\mu$ (Kraftschlußbeiwert zwischen Fahrzeugrad und der Lauffläche des Rads), $V_F$ (Fahrzeuggeschwindigkeit), $d\mu/ds$ (Steigung der $\mu$-Schlupfkurve), s (Radschlupf) und/oder $\rho_B$ (Reibwert der Paarung Bremsbelag-Bremsscheibe) dadurch ermittelt wird, daß

1.) ein mathematisches Systemmodell für die Radgeschwindigkeit und den Bremsdruck so aufgestellt wird, daß dessen Parameter wenigstens die physikalischen Größen $\mu$, $V_F$, $d\mu/ds$, s und $\rho_B$ impliziert enthalten, daß

2.) die Modellparameter mit Hilfe von bekannten Identifikationsalgorithmen jeweils zu Abtastzeitpunkten K unter Verwendung der gemessenen Größen $P_B$ und $V_R$ so geschätzt werden, daß dabei keinerlei a priori-Festlegung der statistischen Eigenschaften der physikalischen Größen vorgenommen wird, daß

3.) wenigstens eine der physikalischen Größen aus den geschätzten Modellparametern bestimmt wird, und daß

4.) unter Einbeziehung der wenigstens einen ermittelten physikalischen Größe der Bremsdruck im Sinne einer Blockierverhinderung variiert wird.

2. Verfahren nach Anspruch 1, dadurch gekennzeichnet, daß als mathematisches Systemmodell die lineare Differenzengleichung $V_{R(K+1)} = p_2{}^*V_R(K) - P_1{}^*P_B(K) + c_1{}^*$ oder eine Umformung davon mit den Parametern $\hat{p}_1{}^*$, $\hat{p}_2{}^*$ und $\hat{c}_1{}^*$ angesetzt wird und daß nach Maßgabe der folgenden Zusammenhänge oder einer Umformung davon der Kraftschlußbeiwert $\mu$ berechnet wird zu:

$$\mu = K_2{}^* \left( \frac{\hat{c}_1{}^*}{1-\hat{p}_2{}^*} - V_R \right), \quad \text{wobei } K_2^* = \frac{T_R^*}{T_A} (1-\hat{p}_2{}^*) \text{ ist,}$$

wenn $(1-\hat{p}_2{}^*) \ll 1$ und

$$K_2^* = \frac{T_R^*}{T_A} \cdot (-\ln\hat{p}_2{}^*),$$

wenn obige Bedingung nicht erfüllt ist,

wobei $T_A$ eine konstante Abtastzeit ist, in deren Abstand die Augenblickswerte $\hat{p}_2{}^*$, $\hat{p}_1{}^*$, $\hat{c}_1{}^*$ aus den Werten von z.B. $P_B$ und $V_R$ abgeschätzt werden und $T_R^*$ eine Konstante gegeben durch folgenden Ausdruck

$$T_R^* = \frac{\theta_R \cdot}{G_F \cdot r_R{}^2}$$

ist, und wobei

$\theta_R$ das Trägheitsmoment des Rads, $G_F$ das anteilmäßige Fahrzeuggewicht und $r_R$ der mittlere Halbmesser des Rads ist,

3. Verfahren nach Anspruch 1 oder 2, dadurch gekennzeichnet, daß aus dem ermittelten $\mu$ die Fahrzeuggeschwindigkeit ($V_{F(K)}$) zum Zeitpunkt K nach Maßgabe des Ausdrucks

$$V_{F(K)} = V_{F(K-1)} - \frac{T_A}{T_F^*} \cdot \mu$$

berechnet wird,

wobei $V_{F(K-1)}$ die zuletzt ermittelte Fahrzeuggeschwindigkeit und $T_F^* = \frac{1}{g}$ ist, wobei g die Erdbeschleunigung ist.

4. Verfahren nach Anspruch 3, dadurch gekennzeichnet, daß nach Maßgabe des folgenden Ausdrucks die Steigung d$\mu$/ds der $\mu$-Schlupfkurve ermittelt wird:

$$\frac{d\mu}{ds} = K_\mu = K_2^* \cdot V_F$$

**5.** Verfahren nach einem der Ansprüche 2 bis 4, dadurch gekennzeichnet, daß der Reibwert $p_B$ der Paarung Bremsbelag-Bremsscheibe nach Maßgabe der Beziehung

$$p_B = \frac{r_R}{r_B} \cdot \frac{G_F}{A_B} \cdot$$

$K_B^*$ ermittelt wird, wobei

$$K_B = \frac{T_R^*}{T_A} \cdot \hat{p}_1^*$$

bei $(1-\hat{p}_2^*) \ll 1$ ist und

$$K_B^* = \frac{T_R^*}{T_A} \frac{\hat{p}_1^*}{1-\hat{p}_2} \cdot (-\ln\hat{p}_2^*)$$

ist, wenn obige Bedingung nicht erfüllt ist
und wobei $r_B$ der mittlere Angriffsradius der Bremskraft und $A_B$ die Fläche des Bremsbelages ist.

**6.** Verfahren nach einem der Ansprüche 1 bis 5, dadurch gekennzeichnet, daß zur Bildung der Fahrzeuggeschwindigkeit $V_{F(k)}$ die Kraftschlußbeiwerte $\mu_i$ mehrerer Räder ermittelt und daraus mit entsprechender Wichtung gemäß der Fahrzeuggewichtverteilung auf die einzelnen Räder ein $\mu_{ges}$ berechnet wird

$$\left(\mu_{ges} = \frac{m_{F1}}{m} \cdot \mu_1 + \frac{m_{F2}}{m} \mu_2 + \ldots \frac{m_{Fn}}{m} \mu_n\right)$$

**7.** Verfahren nach Anspruch 6, dadurch gekennzeichnet, daß zur Ermittlung von $\mu$ bei über ein Differential verbundenen Antriebsrädern die Kopplung durch einen von $\mu$ abzuziehenden Wert $\gamma$ berücksichtigt wird.

**8.** Verfahren nach Anspruch 2, 6 oder 7, dadurch gekennzeichnet, daß der Bremsdruck entsprechend dem ermittelten $\mu$ direkt geregelt wird.

**9.** Verfahren nach Anspruch 1, 3, 6 oder 7, dadurch gekennzeichnet, daß die ermittelte Fahrzeuggeschwindigkeit $V_F$ bzw. $V_{FN}$ zur Bildung der Referenzgeschwindigkeit bei der Schlupfmessung benutzt wird.

**10.** Verfahren nach Anspruch 1, 4, 6 oder 7, dadurch gekennzeichnet, daß die Regelung des Bremsdrucks derart erfolgt, daß K$\mu$ ein vorgegebener kleiner positiver Wert in der Nähe von 0 ist, sodaß der Arbeitspunkt links von und in der Nähe des Maximums der $\mu$-Schlupfkurve liegt.

**11.** Verfahren nach einem der Ansprüche 1 bis 10, dadurch gekennzeichnet, daß zusätzlich die Fahrzeuggeschwindigkeit $V_F$ gemessen wird und daß durch Vergleich der gemessenen und der berechneten Fahrzeuggeschwindigkeit $V_{F(K)}$ ein Korrekturwert $\Delta\mu$ zur genaueren Bestimmung des Kraftschlußbeiwertes $\mu$ ermittelt wird.

12. Verfahren nach einem der Ansprüche 1 bis 10, dadurch gekennzeichnet, daß aus der ermittelten Fahrzeuggeschwindigkeit $V_{F(K)}$ und der gemessenen Radgeschwindigkeit $V_R$ ein Schlupfwert S ermittelt wird, und daß aus dem Vergleich eines Sollschlupfes $S_{Soll}$ mit dem Schlupfwert ein Korrekturwert $\Delta\mu$ zur genaueren Bestimmung des Kraftschlußbeiwertes $\mu$ ermittelt wird.

13. Verfahren nach Anspruch 12, dadurch gekennzeichnet, daß der Sollschlupf $S_{Soll}$ in Abhängigkit von Parametern veränderlich ist.

**Claims**

1. Method for regulating the brake pressure of vehicles using the measured variable wheel speed $V_R$, characterised in that the measured-value pair comprising the instantaneous brake pressure $P_B$ and the instantaneous wheel speed $V_R$ is measured continuously and in that, from this, the instantaneous value of at least one of the physical variables $\mu$ (adhesion coefficient between the vehicle wheel and the running surface of the wheel), $V_F$ (vehicle speed), $d\mu/ds$ (slope of the $\mu$-slip curve), s (wheel slip) and/or $\rho_B$ (coefficient of friction of the brake lining/brake disc combination) is determined by
   1.) setting up a mathematical system model for the wheel speed and the brake pressure in such a way that its parameters implicitly contain at least the physical variables $\mu$, $V_F$, $d\mu/ds$, s and $\rho_B$, by
   2.) the model parameters being estimated in such a way with the aid of known identification algorithms, in each case at sampling instants K, using the measured variables $P_B$ and $V_R$ that no a priori setting of the statistical properties of the physical variables is performed in the process, by
   3.) at least one of the physical variables being determined from the estimated model parameters, and by
   4.) the brake pressure being varied, with the involvement of the at least one physical variable established, to prevent lock-up.

2. Method according to Claim 1, characterised in that the linear differential equation $V_{R(K+1)} = P_2 * V_{R(K)} - P_1 * P_{B(K)} + c_1*$ or a transformation of the latter with the parameters $\hat{p}_1*$, $\hat{p}_2*$ and $\hat{c}_1*$ is set up as mathematical system model and in that the adhesion coefficient $\mu$ is calculated in accordance with the following interrelationships or a transformation thereof as follows:

$$\mu = K_2^* \left( \frac{\hat{c}_1^*}{1-\hat{p}_2^*} - V_R \right) \qquad ,$$

where

$$K_2^* = \frac{T_R^*}{T_1} (1-\hat{p}_2^*)$$

when $(1-\hat{p}_2) \ll 1$ and

$$K_2^* = \frac{T_R^*}{T_1} \cdot (-\ln\hat{p}_2^*),$$

when the above condition is not fulfilled,

$T_A$ being a constant sampling time, at the spacing of which the instantaneous values $\hat{p}_2{}^*$, $\hat{p}_1{}^*$, $\hat{c}_1{}^*$ are estimated from the values of, for example, $P_B$ and $V_R$, and $T_R{}^*$ being a constant given by the following expression

$$T_R^* = \frac{\theta_R \cdot}{G_F \cdot r_R{}^2} \quad ,$$

and

$\theta_R$ being the moment of inertia of the wheel, $G_F$ being the proportional vehicle weight and $r_R$ being the mean radius of the wheel.

3. Method according to Claim 1 or 2, characterised in that the vehicle speed ($V_{F(K)}$) at instant K is calculated from the established $\mu$ in accordance with the expression

$$V_{F(K)} = V_{F(K-1)} - \frac{T_A}{T_F^*} \cdot \mu$$

where $V_{F(K-1)}$ is the last established vehicle speed and where g is the acceleration due to gravity.

4. Method according to Claim 3, characterised in that the slope $d\mu/ds$ of the $\mu$-slip curve is determined in accordance with the following expression:

$$\frac{d\mu}{ds} = K_\mu = K_2^* \cdot V_F$$

5. Method according to one of Claims 2 to 4, characterised in that the coefficient of friction $\rho_B$ of the brake lining/brake disc combination is determined in accordance with the relation

$$\rho_B = \frac{r_R}{r_B} \cdot \frac{G_F}{A_B} \cdot K_B^* \qquad \text{where} \quad K_B = \frac{T_R^*}{T_A} \cdot \hat{p}_1^*$$

when $(1-\hat{p}_2^*) \ll 1$ ist and

$$K_B^* = \frac{T_R^*}{T_A} \frac{\hat{p}_1^*}{1-\hat{p}_2} \cdot (-\ln\hat{p}_2^*)$$

when the above condition is not fulfilled

and where $r_B$ is the mean radius of action of the braking force and $A_B$ is the area of the brake lining.

6. Method according to one of Claims 1 to 5, characterised in that, to form the vehicle speed $V_{F(K)}$, the adhesion coefficients $\mu_i$, of a plurality of wheels are established and a $\mu_{tot}$ is calculated therefrom with appropriate weighting in accordance with the distribution of the vehicle weight between the individual wheels

$$\left(\mu_{ges} = \frac{m_{F1}}{m} \cdot \mu_1 + \frac{m_{F2}}{m}\mu_2 + \dots \frac{m_{Fn}}{m}\mu_n\right)$$

**7.** Method according to Claim 6, characterised in that, to establish $\mu$ in the case of driving wheels connected via a differential, the coupling is taken into account by a value $\gamma$ to be subtracted from $\mu$.

**8.** Method according to Claim 2, 6 or 7, characterised in that the brake pressure is controlled directly in a manner corresponding to the $\mu$ established.

**9.** Method according to Claim 1, 3, 6 or 7, characterised in that the vehicle speed $V_F$ or $V_{FN}$ established is used to form the reference speed in the slip measurement.

**10.** Method according to Claim 1, 4, 6 or 7 characterised in that the brake pressure is controlled in such a way that $K\mu$ is a predetermined small positive value in the vicinity of 0, with the result that the working point is situated to the left and in the vicinity of the maximum of the $\mu$-slip curve.

**11.** Method according to one of Claims 1 to 10, characterised in that the vehicle speed $V_F$ is measured in addition and in that, by comparing the measured and the calculated vehicle speed $V_{F(K)}$, a correction value $\Delta\mu$ is established for more accurate determination of the coefficient adhesion $\mu$.

**12.** Method according to one of Claims 1 to 10, characterised in that a slip value S is established from the vehicle speed $V_{F(K)}$ established and the measured wheel speed $V_R$, and in that, from the comparison of a desired slip $S_{des}$ with the slip value, a correction value $\Delta\mu$ is established for the more accurate determination of the adhesion coefficient $\mu$.

**13.** Method according to Claim 12, characterised in that the desired slip $S_{des}$ is variable as a function of parameters.

**Revendications**

**1.** Procédé de régulation de la pression des freins de véhicule par utilisation de la grandeur de mesure constituée par la vitesse de roues $V_R$, procédé caractérisé en ce qu'on mesure en continu la paire de grandeurs de mesure à savoir la pression instantanée de frein $P_B$ et la vitesse instantanée de roue $V_R$ et on en déduit la valeur instantanée d'au moins l'une des grandeurs physiques $\mu$ (coefficient d'adhérence entre la roue du véhicule et la surface de roulement de la roue), $V_F$ (vitesse du véhicule), $d\mu/ds$ (pente de la courbe de glissement $\mu$), s (glissement de la roue) et/ou $r_B$ (coefficient de frottement de la paire constituée par la garniture de frein et le disque de frein), et
    1) on définit un modèle mathématique pour la vitesse de roue et la pression de frein dont les paramètres contiennent au moins implicitement les grandeurs physiques $\mu$, $V_F$, $d\mu/ds$, s et $r_B$,
    2) on évalue les paramètres du modèle à l'aide d'algorithmes d'identification, connus chaque fois aux instants de détection K en utilisant les grandeurs de mesure $r_B$ et $V_R$ sans faire aucune détermination à priori des propriétés statistiques des grandeurs physiques,
    3) on détermine au moins l'une des grandeurs physiques à partir des paramètres évalués du modèle, et
    4) en prenant en compte au moins l'une des grandeurs physiques obtenues on modifie la pression des freins dans le sens de l'anti-blocage.

**2.** Procédé selon la revendication 1, caractérisé en ce que le modèle mathématique utilise l'équation linéaire des différences

$$V_{R(K+1)} = p_2{}^*V_{R(K)} - p_1{}^*P_{B(K)} + c_1{}^*$$

ou une transformation de celles-ci avec les paramètres
$\hat{p}_1{}^*$, $\hat{p}_2{}^*$, et $\hat{c}_1{}^*$

EP 0 219 023 B1

et on calcule le coefficient d'adhérence $\mu$ à partir de la relation ci-dessus ou d'une relation transformée,

$$\mu = K_2^* \left(\frac{\hat{c}_1^*}{1-\hat{p}_2^*} - V_R\right) \text{ avec } K_2^* = \frac{T_R^*}{T_A} (1-\hat{p}_2^*)$$

$$\text{si } (1-\hat{p}_2^*) << 1 \quad \text{sinon} \quad K_2^* = \frac{T_R^*}{T_A} \cdot (-\ln\hat{p}_2^*)$$

avec $T_A$ : temps de détection constant et pendant les intervalles on évalue les valeurs instantanées $\hat{p}_2^*$, $\hat{p}_1^*$, $\hat{c}_1^*$ à partir des valeurs par exemple de $r_B$ et $V_R$ et $T_R^*$ qui est une constante donnée par la formule suivante :

$$T_R^* = \frac{\theta_R \cdot}{G_F \cdot r_R^2}$$

$\theta_R$ : moment d'inertie de la roue
$G_F$ : poids fractionné du véhicule
$r_R$ : rayon moyen de la roue.

**3.** Procédé selon la revendication 1 ou 2, caractérisé en ce qu'à partir de la valeur $\mu$, déterminée on calcule la vitesse du véhicule ($V_{F(K)}$) à l'instant K selon la formule :

$$V_{F(K)} = V_{F(K-1)} - \frac{T_A}{T_F^*} \cdot \mu$$

dans laquelle
$V_{F(K-1)}$ = vitesse évaluée antérieurement,
$T_F^* = \frac{1}{g}$ , g : accélération terrestre

**4.** Procédé selon la revendication 3, caractérisé en ce que la dérivée $d\mu/ds$ de la courbe de glissement est tirée de :

$\frac{d\mu}{ds} = K_\mu = K_2^* \bullet V_F$

**5.** Procédé selon l'une des revendications 2 à 4, caractérisé en ce que le coefficient de frottement $r_B$ de l'ensemble disque-plaquette de frein est calculé par :

$$r_B = \frac{r_R}{r_B} \cdot \frac{G_F}{A_B} \cdot k_B^* \text{ avec } K_B = \frac{T_R^*}{T_A} \cdot \hat{p}_1^*$$

si $(1-\hat{p}_2^*)$ << 1 sinon

13

$$K^{*}_{B} = \frac{T^{*}_{R}}{T_{A}} \quad \frac{\hat{p}^{*}_{1}}{1-\hat{p}_{2}} \cdot (-\ln\hat{p}^{*}_{2})$$

et avec $r_B$ : rayon moyen d'application de la force de freinage et $A_B$ : surface de la garniture.

**6.** Procédé selon l'une des revendications 1 à 5, caractérisé en ce que pour le calcul de la vitesse $V_{F(K)}$, on évalue les coefficients d'adhérence $\mu_i$ de plusieurs roues et de là, avec une pondération selon la répartition du poids du véhicule sur les différentes roues, un coefficient $\mu_{ges}$ est calculé

$$(\mu_{ges} = \frac{m_{F1}}{m} \cdot \mu_1 + \frac{m_{F2}}{m} \mu_2 + \ldots \frac{m_{Fn}}{m} \mu_n)$$

**7.** Procédé selon la revendication 6, caractérisé en ce que pour l'évaluation de $\mu$ correspondant aux roues motrices reliées par un différentiel, l'accouplement est pris en compte par une valeur g tirée de $\mu$.

**8.** Procédé selon la revendication 2, 6 ou 7, caractérisé en ce que la pression des freins est réglée directement en relation au $\mu$ évalué.

**9.** Procédé selon la revendication 1, 3, 6 ou 7, caractérisé en ce que la vitesse du véhicule calculée $V_F$ - (resp. $V_{FN}$) est utilisée pour le calcul de la référence vitesse correspondant à la mesure du glissement.

**10.** Procédé selon la revendication 1, 4, 6 ou 7, caractérisé en ce que la régulation de la pression est menée de sorte que $K_\mu$ soit une petite valeur positive prédéterminée voisine de 0, pour que le point de travail se trouve à gauche et à proximité du maximum de la courbe de glissement $\mu$.

**11.** Procédé selon l'une des revendications 1 à 10, caractérisé en ce qu'en outre on mesure la vitesse $V_F$ du véhicule et par comparaison entre la vitesse mesurée et la vitesse calculée $V_{F(K)}$) du véhicule on détermine une valeur de correction $D\mu$ pour déterminer de manière plus précise le coefficient d'adhérence $\mu$.

**12.** Procédé selon l'une des revendications 1 à 10, caractérisé en ce qu'à partir de la vitesse calculée $V_{F(K)}$) du véhicule et de la vitesse $V_R$ mesurée, on détermine une valeur de glissement S et partant de la comparaison d'une valeur de glissement de consigne $S_{Cons}$ et de la valeur de glissement, on détermine une valeur de correction $D\mu$ pour déterminer de manière plus précise le coefficient d'adhérence $\mu$.

**13.** Procédé selon la revendication 12, caractérisé en ce que la valeur de consigne $S_{Cons}$ est modifiée en fonction des paramètres.

FIG. 1

FIG. 2a

FIG. 2b

FIG. 2c

## FIG. 3

$\Delta \mu$

## FIG. 4

$\Delta \mu$

$S_{Soll}$